Europäisches Patentamt

European Patent Office

Office européen des brevets

(11) Numéro de publication : **0 323 791 B1**

# (12) FASCICULE DE BREVET EUROPEEN

(45) Date de publication du fascicule du brevet :
**18.03.92 Bulletin 92/12**

(51) Int. Cl.⁵ : **B21D 43/05, B21D 43/02,**
**B21D 35/00, B21D 43/18**

(21) Numéro de dépôt : **88420425.6**

(22) Date de dépôt : **20.12.88**

(54) **Outil de presse pour installation d'emboutissage.**

(30) Priorité : **04.01.88 FR 8800221**

(43) Date de publication de la demande :
**12.07.89 Bulletin 89/28**

(45) Mention de la délivrance du brevet :
**18.03.92 Bulletin 92/12**

(84) Etats contractants désignés :
**AT BE CH DE ES FR GB GR IT LI LU NL SE**

(56) Documents cités :
**DE-A- 2 412 260**
**DE-C- 270 636**
**DE-C- 1 000 004**
**FR-A- 1 275 151**
**FR-A- 2 190 544**
**US-A- 2 012 423**
**US-A- 3 969 918**
**US-A- 4 166 372**

(56) Documents cités :
**PATENT ABSTRACTS OF JAPAN, vol. 11, no. 180 (M-597)[2627], 10 juin 1987; & JP-A-62 009 730 (YOSHIO KAWABATA) 17-01-1987**
**PATENT ABSTRACTS OF JAPAN, vol. 4, no. 68 (M-12)[550], 21 mai 1980, page 164 M 12; & JP-A-55 33 855 (ISUZU JIDOSHA K.K.) 10-03-1980**
**PATENT ABSTRACTS OF JAPAN, vol. 7, no. 16 (M-187)[1161], 22 janvier 1983; & JP-A-57 171 600 (YOSHIO KAWABATA) 22-10-1982**

(73) Titulaire : **A2C GROUPE PRATIC-ADEMVA**
**Avenue des Mélèzes**
**F-74300 Thyez (FR)**

(72) Inventeur : **Lavorel, Gérard**
**Les Fontanettes Metz Tessy**
**F-74370 Pringy (FR)**

(74) Mandataire : **Maureau, Pierre**
**Cabinet GERMAIN & MAUREAU B.P. 3011**
**F-69392 Lyon Cédex 03 (FR)**

EP 0 323 791 B1

**Description**

La présente invention se rapporte à un outil de presse apte à équiper une installation d'emboutissage.

Dans la technique de l'emboutissage de pièces métalliques en grande série, on connaît actuellement deux grandes familles de dispositifs d'emboutissage :
– les dispositifs dits à "outils à suivre" pour lesquels c'est la bande métallique elle-même qui supporte les emboutis réalisés dans cette bande. Dans ces dispositifs, l'alimentation en bande métallique est effectuée suivant l'axe de la machine, et l'on dit qu'il s'agit là d'une alimentation longitudinale. Ces dispositifs utilisent une presse traditionnelle, sur laquelle sont montés les outils à suivre ;
– les "presses à transfert" dans lesquelles les pièces métalliques à traiter sont tout d'abord totalement détachées de la bande métallique qui alimente la machine, et transférées d'un poste d'emboutissage au suivant dans cette machine au moyen de barres de transfert qui sont totalement intégrées à la machine. Sur ces dispositifs, l'alimentation par la bande métallique est nécessairement transversale, ne serait-ce que par le fait que l'évacuation des déchets au moment de la découpe des morceaux sur la bande ne peut bien évidemment pas être effectuée dans l'axe de la machine, mais plutôt perpendiculairement à cet axe.

L'utilisation d'une presse à transfert est indispensable pour l'exécution de certains travaux d'emboutissage, qu'il est impossible d'effectuer au moyen d'une presse classique munie d'outils à suivre.

Les presses à transfert ont pour inconvénients d'être relativement complexes, et par suite de prix de revient assez élevé par rapport aux presses à outils à suivre. En outre, la nécessité d'alimenter chaque presse de façon transversale est très pénalisante pour l'implantation des ateliers, car il est nécessaire d'y prévoir un espace suffisant pour permettre cette alimentation transversale. Enfin, ces presses sont uniques, et bien entendu spécifiques pour le travail d'emboutissage avec transfert automatique d'un poste au suivant : elles ne peuvent convenir pour le travail avec outils à suivre, souvent préféré car plus rentable et plus économique, ou pour d'autres travaux à la presse.

On connaît, par le brevet US-A-3 969 918, une presse transfert à alimentation longitudinale. Cette presse est du type comportant des moyens de découpe, dans une bande alimentée longitudinalement, d'un flan à emboutir, ces moyens étant constitués par un poinçon inférieur fixe porté par la table de la presse et une matrice supérieure verticalement mobile, normalement située au-dessus du poinçon et destinée à être déplacée en direction du poinçon par le coulisseau mobile de la presse, des moyens de découpe du déchet d'extrémité de bande constitués par une cisaille présentant une lame fixe et une lame mobile, un dispositif de transfert d'un flan découpé, préembouti ou embouti, du poste qu'il occupe au poste suivant et des moyens pour soulever chaque flan découpé jusqu'au niveau du dispositif de transfert.

Dans cette presse, les moyens de découpe des flans et ceux de découpe des déchets sont séparés et indépendants les uns des autres.

En outre, le dispositif de transfert des flans est placé à un niveau situé juste au-dessus de la face supérieure du poinçon et, par conséquent, en-dessous de la position haute de repos de la matrice. Il en résulte qu'après avoir découpé un flan, lors de sa course descendante, la matrice doit être remontée au-dessus de ce flan qui, pour que ses bords ne soient pas déformés lors de la course ascendante de la matrice, doit être parfaitement maintenu appliqué, par son bord périphérique, contre le poinçon, ce qui augmente l'usure des bords de découpe de la matrice et complique singulièrement sa forme puisqu'elle doit donc comporter un poussoir intérieur annulaire de même périmètre extérieur que le poinçon, poussoir à l'intérieur duquel doivent pouvoir circuler les moyens de soulèvement des flans.

Enfin, dans cette presse, la matrice, le poussoir annulaire et les moyens de soulèvement des flans constituent un sous-ensemble indépendant du poinçon et qui est destiné à être fixé à un coulisseau mobile de la presse tandis que la lame mobile de la cisaille constituant les moyens de découpe du déchet est portée par un pontet monté sur ressort et porté par la semelle inférieure fixe de l'outillage.

On conçoit aisément que non seulement cet outillage est obligatoirement très complexe, mais qu'en outre tout changement de forme de flan nécessite des opérations longues et onéreuses de démontage de l'ancien outillage et montage et réglage du nouveau.

On connaît aussi, par le document FR-A-2190.544 un outillage dans lequel la lame fixe destinée à découper les déchets est portée par le support du poinçon tandis que la lame mobile est portée par la matrice.

La présente invention vise à remédier à tous ces inconvénients. A cet effet, elle concerne un outil de presse pour installation d'emboutissage du type précité dans lequel le poinçon est porté par une semelle destinée à être fixée sur la table de la presse et supportant la lame fixe de la cisaille de découpe des déchets, des poussoirs à ressorts qui entourent le poinçon et destinés à jouer le rôle d'extracteurs et au moins deux colonnes verticales destinées à supporter et guider la matrice, dont est solidaire la lame mobile de la cisaille, dans ses déplacements verticaux, colonnes auxquelles sont associés des moyens à ressort assurant normalement le maintien de la matrice en position haute de repos, les moyens de soulèvement des flans étant eux-mêmes constitués par une ventouse pneumatique ou magnétique, portée télescopiquement par la matrice et de manière à être déplacée, vers le bas, c'est-à-dire en direction du poinçon, avec un décalage suffisant pour n'atteindre le flan qu'après sa découpe par la matrice et de manière qu'en position haute de repos, cette ventouse soit située au niveau du dispositif de transfert, c'est-à-dire au-dessus de la matrice.

Ainsi, cet outil forme un sous-ensemble qu'il est facile de monter sur la table d'une presse et de l'en démonter sans avoir à procéder à des réglages longs et onéreux puisque ce sous-ensemble peut être préréglé et même réglé, avant d'être monté sur la presse. Ce même sous-ensemble peut d'ailleurs être séparé du reste de l'outillage représenté et être utilisé avec un autre outillage utilisant le même flan pour obtenir une autre installation d'emboutissage utilisant un même flan au départ.

Suivant une autre caractéristique avantageuse de l'invention, le dispositif de transfert des flans découpés est situé à un niveau supérieur à celui des moyens de découpe des flans, c'est-à-dire à celui de la matrice en position haute de repos.

Cette disposition présente l'avantage de permettre une simplification considérable de l'outil puisque la matrice ne doit pas être remontée au-dessus du flan qui vient d'être découpé avant qu'il ne soit soulevé au niveau du dispositif de transfert. Il n'est donc pas utile de prévoir de poussoir de maintien du flan appliqué contre le poinçon lors de la remontée de la matrice et l'usure du bord de découpe de la matrice est donc réduite.

Suivant une autre caractéristique de l'invention, le dispositif de transfert de chaque flan d'un poste au suivant comprend essentiellement deux barres de transfert animées d'un mouvement longitudinal de va-et-vient synchronisé avec celui du coulisseau de la presse par un système bielle-manivelle, chaque barre supportant une série de pinces articulées et disposées de manière que chacune d'elles corresponde avec une pince de l'autre barre pour former une paire de pinces, chaque barre étant en outre montée transversalement mobile sur des supports d'extrémité munis de lumières transversales et étant constamment poussée par des moyens à ressorts en direction de l'autre, tandis que des poussoirs à rampes d'écartement, portées par la semelle fixée au coulisseau de la presse, provoquent leur écartement et la libération des flans à chaque descente du coulisseau, les barres occupant alors leur position extrême gauche.

De toute façon, l'invention sera bien comprise, et ses avantages et autres caractéristiques ressortiront, au cours de la description suivante d'un exemple non limitatif de réalisation de cet outil de presse, en référence au dessin schématique annexé dans lequel :

Figure 1 est une vue longitudinale, avec coupe partielle, de cet outil monté sur presse, une bande métallique étant alimentée axialement et le coulisseau de la presse étant en position haute ;

Figure 2 est une vue similaire à la figure 1, le coulisseau ayant amorcé sa descente ;

Figure 3 montre de même le résultat obtenu lorsque le coulisseau est parvenu en position basse ;

Figure 4 montre la position de ce même dispositif lorsque le coulisseau est ensuite revenu en position haute ;

Figure 5 est une vue en plan simplifiée du dispositif à barres de transfert ;

Figure 6 est une vue en plan simplifiée du système d'entraînement de ces barres de transfert.

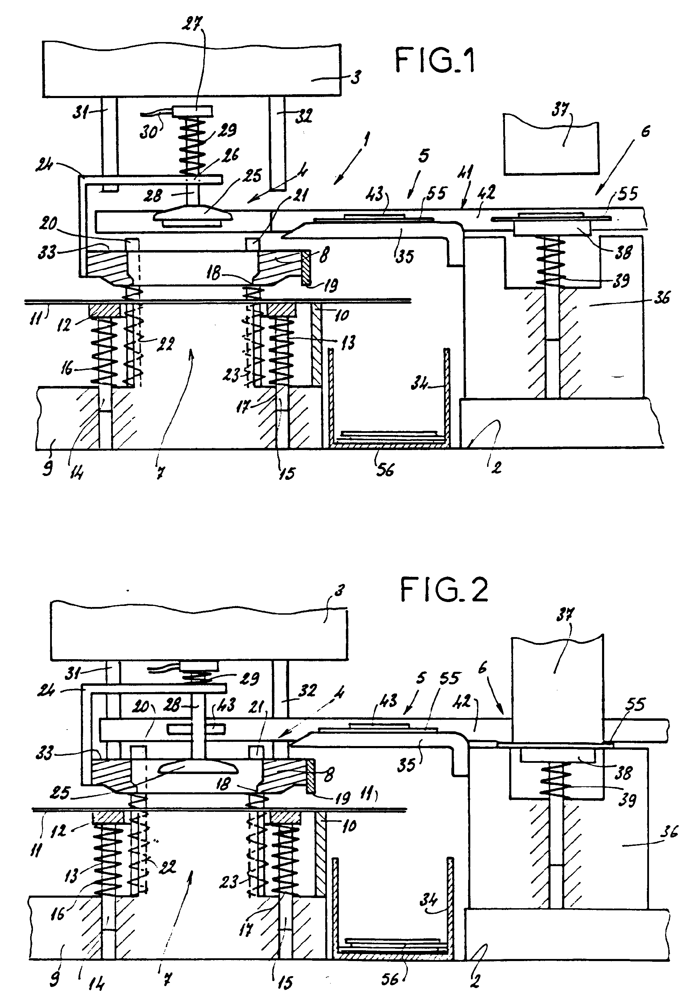

En se reportant tout d'abord aux figures 1, 5 et 6, cet outil 1 est apte à être monté sur une presse classique dont on distingue la table 2, qui est fixe, et le coulisseau, non représenté, qui est mobile verticalement et auquel est fixée une semelle supérieure 3.

Sur la figure 1 sont visibles les trois premiers postes de la machine, qui sont successivement :
- un poste 4 de découpage du flan à emboutir et du déchet d'extrémité de bande,
- un poste d'attente 5 dans lequel le flan découpé est mis en attente et le déchet est recueilli,
- le premier poste d'emboutissage 6.

Le premier poste 4 comporte essentiellement un poinçon 7, qui est, de manière inhabituelle, fixé sur la table 2 de la presse, et une matrice de découpe 8.

Le poinçon 7, dont le pourtour est identique à celui du flan métallique à découper, est porté par une semelle inférieure 9 fixée à la table 2 de la presse. Cette semelle 9 porte aussi la lame fixe 10 d'une disaille dont le rôle sera détaillé plus loins et dont la longueur est supérieure à la largeur de la bande métallique 11 par laquelle la machine est alimentée. Cette bande 11 est soutenue, d'une part, par le poinçon 7 et, d'autre part, par une couronne 12, elle-même supportée par des tiges-poussoirs verticales 13 montées coulissantes dans deux puits verticaux 14,15 creusés dans la semelle inférieure 9 pour leur servir de guide, ces tiges étant repoussées vers le haut par deux ressorts hélicoïdaux 16,17.

La matrice 8, dont l'arête tranchante 18 est conformée au périmètre du poinçon 7 porte, latéralement, une lame mobile 19 qui, avec la lame fixe 10 précitée constitue la cisaille destinée à la découpe des déchets d'extrémité de la bande 11. Cette matrice est montée coulissante dans le sens vertical sur deux colonnettes verticales de guidage 20 et 21, qui la traversent donc dans le sens vertical et qui sont portées par la semelle 9 du poinçon 7. Elle est repoussée vers le haut par deux ressorts hélicoïdaux 22,23 qui reposent sur la semelle 9 et entourent les colonnettes 20 et 21.

La matrice 8 supporte, à l'aide d'un bras en équerre 24, une ventouse pneumatique 25 qui est coaxiale à son arête tranchante cylindrique 18. Cette ventouse 25 est montée télescopique, dans le sens vertical, sur le bras 24 : elle le traverse en 26 et l'extrémité supérieure ou tête élargie 27 de sa tige verticale de support 28 est repoussée vers le haut par un ressort hélicoïdal 29 qui l'entoure. La ventouse 25 est reliée à une source d'aspiration par un tuyau flexible 30.

La semelle supérieure 3, qui est fixée au coulisseau de la presse, comporte deux colonnettes verticales de poussée 31,32, qui sont placées, de part et d'autre de la ventouse 25, au droit de la face supérieure 33 de la partie pleine de la matrice 8.

Le deuxième poste 5 comporte simplement un réceptacle 34, qui est destiné à recevoir les déchets 56 de bout de bande 11, et une table de dépose 35, qui surplombe le bac 34 et qui est fixée en porte-à-faux sur le côté gauche de la matrice fixe 36 qui équipe le poste suivant 6, qui est le premier poste d'emboutissage.

Ce poste d'emboutissage, tout à fait classique, comporte une matrice 36 fixée sur la table 2, un poinçon 37 fixé à la semelle du coulisseau, et une tablette 38, montée coulissante axialement dans la matrice 36 et repoussée vers le haut par un ressort hélicoïdal 39, cette tablette ayant pour rôle de supporter le flan 55 à emboutir et de l'extraire après emboutissage.

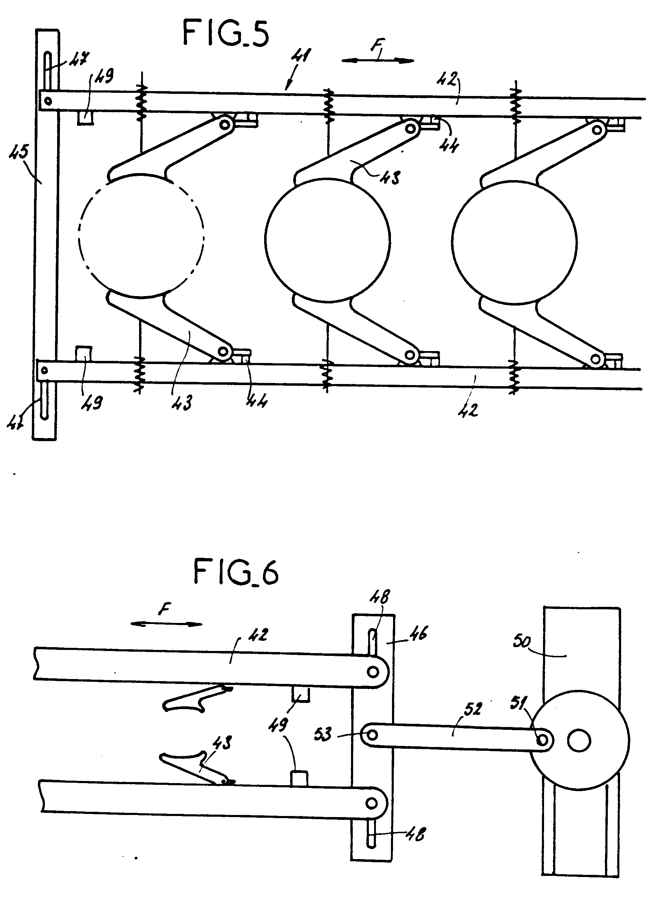

L'outil de presse comporte encore un dispositif 41 de transfert, d'un poste au suivant, des flans et emboutis, dispositif qui comporte essentiellement des barres de transfert 42, animées d'un mouvement longitudinal de va-et-vient comme indiqué par la double flèche F, et des pinces 43. Ce dispositif de transfert 41, qui ne diffère pas sensiblement de ceux qui sont normalement intégrés aux presses à transfert, est représenté un peu plus en détails aux figures 5 et 6, la figure 5 montrant l'extrémité amont de ce dispositif de transfert et la figure 6 en montrant l'extrémité aval.

Les barres de transfert 42 portent, de manière très classique, les pinces 43 dont la rotation, dans le sens de la fermeture, est limitée par des butées 44. Ces barres 42 sont tenues, à leurs deux extrémités, par des traverses 45,46, ces extrémités pouvant coulisser transversalement dans des lumières allongées 47,48 aménagées dans les traverses 45 et 46 : de la sorte, les barres 42 sont libres de s'écarter l'une de l'autre lorsque des poussoirs à rampe 49, portés par la semelle 3 du coulisseau, tendent, de manière bien connue, à provoquer cet écartement lors de la descente du coulisseau de la presse. Lorsque les rampes 49 sont relevées, le coulisseau étant en position haute, les barres 42 sont ramenées à leur position la plus rapprochée, représentée aux figures 5 et 6, par des ressorts de rappel non représentés.

Les barres de transfert 42 effectuent un mouvement de va-et-vient longitudinal, selon la flèche F. Le dispositif de commande de ce mouvement est visible à la figure 6, ce dispositif étant tout-à-fait nouveau. Il comporte un vérin rotatif 50 qui transforme, de manière en soi connue, le mouvement alternatif linéaire transversal de sa tige, formant crémaillère, en un mouvement alternatif de rotation de sa roue dentée. Cette dernière fait tourner un maneton 51 auquel est articulée, par l'une de ses extrémités, une manivelle 52 dont l'autre extrémité 53 est articulée au milieu de la barre transversale 46. Ce dispositif confère aux barres de transfert 42 un mouvement longitudinal à vitesse de déplacement sinusoïdale.

Le fonctionnement de l'outil 1 sera maintenant décrit en référence aux figures 1 à 4.

La bande métallique 11 est alimentée dans le sens longitudinal. En position de départ du cycle (figure 1), la semelle supérieure 3 du coulisseau est en position haute (point mort haut) et la bande 11 repose sur le poinçon 7 et sur la couronne d'extraction 12. Les barres de transfert 42 sont décalées vers la droite et leurs pinces 43 enserrent étroitement un flan 55, posé en attente sur la tablette 35 du poste d'attente 5, un autre flan préembouti 55', posé sur la tablette 38 du premier poste d'emboutissage 6, et ainsi de suite pour les pièces en attente sur les postes d'emboutissage suivants. En figure 2 est représenté le début de la phase de descente du coulisseau de la presse. Les rampes portées par la semelle 3 du coulisseau ont écarté les barres de transfert 42, et donc les pinces 43, tandis que la semelle 3, après être venue en appui sur la tête 27, a fait descendre la ventouse 25 par rapport au bras 24 en comprimant le ressort 29. Les colonnettes 31,32, parvenues en appui sur la surface 33 de la matrice 8, commencent donc à la pousser vers le bas.

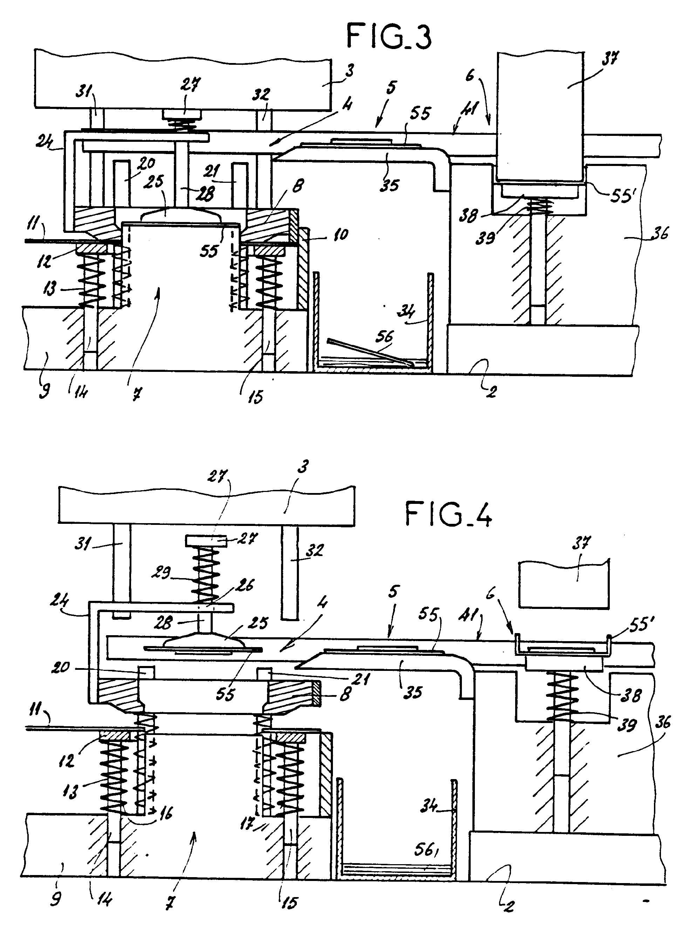

Le coulisseau continuant sa descente, la matrice 8 descend alors avec lui, de sorte que la matrice 8 et le poinçon 7 d'une part, et les lames 10 et 19 de la cisaille d'autre part, découpent dans la bande 11, par effets de poinçonnage et cisaillage, respectivement, un flan 55, qui reste posé sur le poinçon 7, et un déchet de bout de bande 56, qui tombe dans le réceptacle 34 (voir figure 3). Simultanément, refoulées par la semelle supérieure 3 et la bande 11, les tiges 13 s'enfoncent dans leurs puits respectifs 14 et 15.

La position représentée figure 3 est celle atteinte lorsque le coulisseau est arrivé à son point mort bas : à ce moment, la ventouse 25, qui est parvenue en appui sur le flan 55, est alors reliée à la source d'aspiration, ce qui entraîne le maintien ferme de ce flan 55 contre elle. Bien entendu, l'emboutissage, au poste 6, d'un autre flan 55' s'est effectué en même temps et de manière classique lors de la descente concomitante du poinçon 37.

Le dépression étant maintenue dans la ventouse 25, le coulisseau remonte, ainsi que la bande 11 poussée par la couronne d'extraction 12, elle-même poussée par les tiges 13, la matrice 8 poussée par les ressorts 22 et 23, et la ventouse 25 poussée par le ressort 29 et soulève donc le flan 55 jusqu'à l'amener à l'horizontale au niveau des barres de transfert 42, qui se referment alors sur les flans 55 et 55′, en raison de la remontée du coulisseau et donc des rampes 49 : la figure 4 représente la position atteinte lorsque la semelle 3 du coulisseau est revenue à son point mort haut. A ce moment, les barres de transfert 42 sont décalées vers la droite en raison du mouvement du maneton 51, ce qui déplace d'un poste tous les flans 55,55′ portés par les pinces 43, de sorte que l'on revient à la position de la figure 1, à cette différence près que chaque flan 55 a pris la place de celui qui précède. La bande 11 a bien entendu avancé d'une longueur suffisante pour reprendre sa position relative de la figure 1.

Bien entendu, l'invention n'est pas limitée à l'exemple de réalisation qui vient d'être décrit. Par exemple, afin d'optimiser l'utilisation de la matrice, l'outil peut être prévu pour découper les flans en quinconce.

## Revendications

1. Outil de presse pour installation d'emboutissage, du type comportant des moyens de découpe (7,8), dans une bande (11) alimentée longitudinalement, d'un flan à emboutir (55), ces moyens étant constitués par un poinçon inférieur fixe (7) porté par la table (2) de la presse et une matrice supérieure (8) verticalement mobile, normalement située au-dessus du poinçon (7) et destinée à être déplacée en direction de ce poinçon (7) par le coulisseau mobile de la presse, des moyens (10,19) de découpe du déchet d'extrémité (56) de la bande (11) constitués par une cisaille présentant une lame fixe (10) et une lame mobile (19), un dispositif de transfert (41) d'un flan découpé (55), pré-embouti (55′) ou embouti, du poste (4,5,6) qu'il occupe au poste suivant et des moyens (25) pour soulever chaque flan découpé (55) jusqu'au niveau du dispositif de transfert (41), la lame fixe (10) étant portée par le support (9) du poinçon (7), tandis que la lame mobile (19) est portée par la matrice (8), **caractérisé en ce que** le poinçon (7) est porté par une semelle (9) destinée à être fixée sur la table (2) de la presse et supportant la lame fixe (10) de la cisaille de découpe des déchets (56), des poussoirs (12,13) à ressorts (16,17) qui entourent le poinçon (7) et destinés à jouer le rôle d'extracteurs et au moins deux colonnes verticales (20,21) destinées à supporter et guider la matrice (8), dont est solidaire la lame mobile (19) de la cisaille, dans ses déplacements verticaux, colonnes (20,21) auxquelles sont associés des moyens à ressort (22,23) assurant normalement le maintien de la matrice (8) en position haute de repos, les moyens de soulèvement des flans (55) étant eux-mêmes constitués par une ventouse (25) pneumatique ou magnétique, portée télescopiquement par la matrice (8) et de manière à être déplacée, vers le bas, c'est-à-dire en direction du poinçon, avec un décalage suffisant pour n'atteindre le flan qu'après sa découpe par la matrice et de manière qu'en position haute de repos, cette ventouse soit située au niveau du dispositif de transfert (41,43), c'est-à-dire au-dessus de la matrice (8).

2. Outil de presse selon la revendication 1, caractérisé en ce que le dispositif de transfert (41) des flans découpés (55,55′) est situé à un niveau supérieur à celui des moyens de découpe (7,8 ; 10,19) des flans (55), c'est-à-dire à celui de la matrice (8) en position haute de repos.

3. Outil de presse selon la revendication 1 ou la revendication 2, caractérisé en ce que le dispositif de transfert (41) de chaque flan (55,55′) d'un poste (4,5,6) au suivant comprend essentiellement deux barres de transfert (42) animées d'un mouvement longitudinal de va-et-vient (F), synchronisé avec celui du coulisseau de la presse, par un système bielle-manivelle (52,51), chaque barre (42) supportant une série de pinces articulées (43) et disposées de manière que chacune d'elles corresponde avec une pince (43) de l'autre barre (42) pour former une paire de pinces, chaque barre (42) étant en outre montée transversalement mobile sur des supports d'extrémité (45,46) munis de lumières transversales (47,48) et étant constamment poussée par des moyens à ressort en direction de l'autre, tandis que des rampes d'écartement (49), portés par la semelle (3) fixée au coulisseau de la presse, provoquent leur écartement et la libération des flans (55,55′) à chaque descente du coulisseau, les barres (42) occupant alors leur position extrême gauche.

## Patentansprüche

1. Stanzwerkzeug für eine Ziehpreßeinrichtung, die Mittel zum Stanzen (7, 8) einer zu ziehenden Scheibe (55) in einem längs zugeführten Streifen (11) aufweist, wobei diese Mittel durch einen unteren ortsfesten Stempel (7), der von dem Pressentisch (2) getragen ist sowie einer oberen vertikal beweglichen Matritze (8) gebildet sind, die normalerweise oberhalb des Stanzstempels (7) angeordnet ist und die in Richtung auf den Stanzstempel (7) durch den beweglichen Stößel der Presse verlagerbar ist, und mit Mitteln (10, 19) des außenendigen Abfalles (56) des Streifens (14), gebildet durch eine Schere mit einer festen Schneide (10) und einer beweglichen Schneide (19), mit einer Transfereinrichtung (41) für den Transfer der ausgestanzten (55), vorgezogenen (55′) oder gezogenen Scheibe von der Station (4, 5, 6), die sie innehat, zur nächsten Station und mit Mitteln (25) zum Hochheben der ausgestanzten Scheibe (55) bis in die Höhenlage der Transfereinrichtung (41), wobei die feste Schneide (10) von dem Support (9) des Stanzstempels (17) getragen ist, während die bewegliche Schneide (19) von der Matritze (8) getragen ist, **dadurch gekennzeichnet,** daß der Stanzstempel (7) durch eine Fußplatte (9), die auf dem Tisch (2) der Presse befestigbar ist, getragen ist, die auch die feste Schneide (10) der Schere zum Abtrennen der Abfälle (16) trägt, wobei mit Federn (16, 17) versehene Stößel (12, 13) den Stanzstempel (7) umgeben und die Rolle von Abstreifern spielen und mindestens zwei vertikale Säulen (20, 21) vorgesehen sind, die die Matritze (8), mit der die bewegliche Schneide (19) der Schere fest verbunden ist, bei ihren vertikalen Verlagerungsbewegungen tragen und führen, wobei den Säulen (20, 21) Federmittel (22, 23) zugeordnet sind, die normalerweise die Matritze (8) in ihrer oberen Ruhelage halten und wobei ferner die Mittel zur Anhebung der Scheiben (25) ihrerseits aus einem pneumatischen oder magnetischen Greifnapf (25) gebildet sind, der teleskopisch von der Matritze (8) derart getragen ist, daß er nach unten, d. h. in Richtung auf den Stanzstempel, mit einem solchen Versatz verlagerbar ist, der ausreicht, damit er die Scheibe erst nach ihrer Ausstanzung durch die Matritze erreicht und ferner derart, daß in der oberen Ruhelage dieser Greifnapf in Höhe der Transfereinrichtung (41, 43), d. h. oberhalb der Matritze (8) liegt.

2. Stanzwerkzeug nach Anspruch 1, dadurch gekennzeichnet, daß die Transfereinrichtung (41) für die ausgestanzten Scheiben (55, 55') in einer Höhenlage oberhalb derjenigen der Stanzmittel (7, 8; 10, 19) der Scheiben (15), d. h. derjenigen der Matritze (8) in ihrer oberen Ruhelage liegt.

3. Stanzwerkzeug nach Anspruch 1 oder 2, dadurch gekennzeichnet, daß die Transfereinrichtung (41) zum Transfer einer jeden Scheibe (55, 55') von einer Station (4, 5, 6) zur nächsten im wesentlichen zwei Transferstangen (42) aufweist, die in einer hin- und hergehenden Längsbewegung (F) angetrieben sind, die mit derjenigen des Pressenstößels durch ein System Pleuel-Kurbel (52, 51) synchronisiert ist, wobei jede Stange (42) eine Reihe von schwenkbaren Klemmen (43) trägt, die derart angeordnet sind, daß eine jede von ihnen mit einer Klemme (43) der anderen Stange korrespondiert, um ein Klemmenpaar zu bilden, wobei ferner jede Stange (42) darüber hinaus transversal beweglich auf Endsupporten (45, 46) montiert ist, die mit Transversalschlitzen (47, 48) versehen sind und die konstant von Federmitteln in Richtung auf die andere zu gedrückt werden, während Abstandsrampen (49), getragen von der Platte (3), die am Pressenstößel befestigt ist, ihre Entfernung voneinander und die Freigabe der Scheiben (55, 55') bei jedem Stößelniedergang hervorrufen, wobei die Stangen (42) dann ihre maximale Linkslage einnehmen.

**Claims**

1. Press tool for a drawing machine, of the type having means for cropping (7, 8), from a strip (11) fed longitudinally, a blank to be drawn (55), these means consisting of a fixed bottom punch (7) carried by the table (2) of the press and a vertically movable top die (8), normally situated above the punch (7) and designed to be moved in the direction of this punch (7) by the moving slide of the press, means (10, 19) for cutting the end scrap (56) off the strip (11) consisting of a shearing tool having a fixed blade (10) and a moving blade (19), a device (41) for transferring a cropped blank (55), pre-drawn (55') or drawn, from the station (4, 5, 6) which it is occupying to the following station and means (25) for lifting each cropped blank (55) up to the level of the transfer device (41), the fixed blade (10) being carried by the support (9) of the punch (7), whilst the moving blade (19) is carried by the die (8), characterised in that the punch (7) is carried by a base (9) designed to be fixed to the table (2) of the press and supporting the fixed blade (10) of the shearing tool for cutting off the scrap (56), pushers (12, 13) with springs (16, 17) which surround the punch (7), designed to fulfill the role of extractors, and at least two vertical posts (20, 21) designed to support and guide the die (8), to which is attached the moving blade (19) of the shearing tool, in its vertical movements, posts (20, 21) with which are associated spring means (22, 23) normally holding the die (8) in its upper position of rest, the means for lifting the blanks (55) themselves consisting of a pneumatic or magnetic sucker (25), carried telescopically by the die (8) so as to be moved, downwards, that is to say in the direction of the punch, with sufficient separation for it not to reach the blank until after it has been cropped by the die and so that in the upper position of rest this sucker is situated at the level of the transfer device (41, 43), that is to say above the die (8).

2. Press tool according to claim 1, characterised in that the device (41) for transferring the cropped blanks (55, 55') is situated at a level higher than the level of the means (7, 8; 10, 19) for cropping the blanks (55), that is to say at the level of the die (8) in its upper position of rest.

3. Press tool according to claim 1 or claim 2, characterised in that the device (41) for transferring each blank (55, 55') from one station (4, 5, 6) to the following one essentially comprises two transfer bars (42) driven in a longitudinal reciprocating motion (F), synchronised with the motion of the press slide, by means of a connecting rod/crank system (52, 51), each bar (42) supporting a series of hinged grippers (43) arranged so that each of them corresponds to a gripper (43) on the other bar (42) to form a pair of grippers, each bar (42) being in addition mounted so as to be transversely movable on two end supports (45, 46) provided with transverse slots (47, 48) and being pushed constantly by spring means in the direction of the other, whilst separating ramps (49), carried by the block (3) fixed to the slide of the press, bring about their separation and the release of the blanks (55, 55') at each descent of the slide, the bars (42) then occupying their extreme left hand position.

FIG.1

FIG.2

EP 0 323 791 B1

# FIG.3

# FIG.4

## FIG.5

## FIG.6